# EUROPEAN PATENT APPLICATION

(11) **EP 2 477 137 A1**
(43) Date of publication of application: **18.07.2012**
(21) Application number: 11150677.0
(22) Date of filing: 12.01.2011
(51) Int. Cl.: G06F 21/24

(54) **Method for verifying the integrity of a set of data**

(71) Applicant: Safelayer Secure Communications, S.A., 08039 Barcelona (ES)
(72) Inventor: Iñigo Griera, Jordi, 08780 Pallejà (ES); Osorio Herrero, David, 08028 Barcelona (ES)
(74) Representative: ZBM Patents

(57) **Abstract**

Method for verifying the integrity of a set of data in a system creating at least one process executing at least one updating operation on the set of data, characterized in that the method comprises:
for (101) each updating operation executed by a process created in the system: calculating (102) an operation hash value representing the updating operation by applying a hash function to the updating operation; aggregating (103) the operation hash value to a global hash value accumulator by applying an aggregation function; and
when (104, 105) a condition for verifying the integrity of the set of data is satisfied: calculating (106) an element hash value for each element of the set of data by applying the hash function to each element of the set of data, calculating (107) an aggregated element hash value by aggregating the calculated element hash values by applying the aggregation function, verifying (108) the integrity of the set of data by comparing the aggregated element hash value and the global hash value accumulator.

## Description

The present invention relates to a method for verifying the integrity of a set of data in a system creating at least one process executing at least one updating operation on the set of data.

The invention also relates to a system and a computer program for verifying the integrity of a set of data suitable for carrying out such a method.

### Background art

Verification of data integrity is commonly understood as verifying that data of a system, which normally comprises processes updating said data, has not been affected by malicious manipulations. Data integrity is confirmed if it is possible to prove that data has not been manipulated or, in other words, data integrity is not ensured when it is not possible to determine whether data has not been manipulated.

There exist different methods and systems related to verification of data integrity. Most of them are based on maintaining integrity control data for each element or block of elements comprised in the set of data to be protected, so this type of methods have the drawback of requiring very big storage capacities. This "element-by-element" approach also has the inconvenient of requiring big processing capabilities because several calculations are usually executed for each access to data.

Other types of methods for verifying data integrity improve efficiency of the previously commented prior art by using, for example, cumulative hash functions or incremental hash functions, said improvement of efficiency being achieved in terms of reducing storage and processing requirements.

For instance, the US patent application US 2003126400 A1 discloses data integrity checking methods utilizing a cumulative hash function. A sequence of data blocks and a corresponding sequence of hashes are stored on a medium. Each hash in the sequence of hashes corresponds to a data block in the sequence of data blocks. A particular hash corresponding to a particular data block is determined as a function of the particular data block and at least one previous hash corresponding to a previous data block in the sequence of data blocks. Therefore, the storage and processing requirements seem to be attenuated in comparison with the abovementioned "element-by-element" approach.

Nevertheless, the method of US 2003126400 A1 has the inconvenient of only being applicable to sets of data updated with only insertions (i.e. deletions and modifications are not supported). The method is based on hashing blocks, each hash being obtained as a function of a particular data block and at least one previous hash corresponding to a previous data block in the sequence of data blocks, and the integrity is validated by recalculating each hash and comparing each recalculated hash with the corresponding original hash. Then, a deletion or a modification in one of the hashed blocks would produce a recalculated hash different from the original hash, said difference not necessarily denoting malicious manipulations on the hashed block.

On the other hand, the US patent application US 5475826 A discloses an invention that permits the hash of a file to be taken on an incremental basis. It permits any part of the file to be changed while allowing a new aggregate hash to be computed based on the revised file portion and the prior total hash. The aggregate hash is readily updated with each record revision without having to re-compute the hash of the entire file in accordance with conventional techniques. Thus, this method seems to be applicable to files updated through any kind of updating operations (not only insertions), so this method overcomes the limitation of US 2003126400 A1 described in the previous paragraph.

Moreover, the method of US 5475826 A only requires a limited amount of additional storage for each file, which could easily be maintained in the system directory, or in a special ancillary (and possibly encrypted) file, with other information about each file. Then, this method also improves efficiency in relation to the "element-by-element" approach.

However, this method of US 5475826 A presents the drawback of having minimum interlace of data, which makes easier successful execution of replay attacks. That is to say, a file (or table) and its associated hash can be replaced by a previous version (e.g. a backup) without affecting to the global integrity of the file system (or database), since each file has its own related hash without relation with the other hashes of the other files. For this reason, this method may be considered not secure enough.

### Summary of the invention

There thus still exists a need for a new method for verifying the integrity of a set of data in a system creating at least one process executing at least one updating operation (insertion, deletion or modification) on the set of data, said new method offering improved balance between efficiency and security in comparison with the known prior art.

The object of the present invention is to fulfil such a need. Said object is achieved with a method for verifying the integrity of a set of data in a system creating at least one process executing at least one updating operation on the set of data according to claim 1, a system for verifying the integrity of a set of data according to claim 15, and a computer program product comprising program instructions for causing a computer to perform said method according to claim 12.

In a first aspect, the present invention provides a method of the mentioned type comprising:
for each updating operation executed by a process created in the system:
   calculating an operation hash value representing the updating operation by applying a hash function to the updating operation;
   aggregating the operation hash value to a global hash value
   accumulator by applying an aggregation function;
when a condition for verifying the integrity of the set of data is satisfied:
   calculating an element hash value for each element of the set of data by applying the hash function to each element of the set of data;
   calculating an aggregated element hash value by aggregating the calculated element hash values by applying the aggregation function;
   verifying the integrity of the set of data by comparing the aggregated element hash value and the global hash value accumulator.

Hash function refers to a function or method to generate keys that almost uniquely represent any type of input data. For example, a document, or a record, or a file, etc. may be summarized and/or identified by a datum obtained by applying a hash function to said document or record or file. The result of applying a hash function is known as a hash value, which probabilistically represents the data inputted to the hash function. A hash function may be non-keyed (not using a secret key) or keyed (using a secret key). For example, MAC (Message Authentication Code) functions are a subclass of keyed hash functions. A hash function is considered collision resistant in case of finding any two inputs having the same hash value is computationally difficult. The term collision applied to hash functions has not to be confused with collisions between processes, which refers to interferences between several processes when trying to update the same data elements.

Then, any reference herein to a hash function must be understood as said hash function being of any type (keyed or non-keyed), unless explicit distinction is done. No further details about hash functions (keyed or non-keyed) are provided because they are well known in the field of the invention and they are not an object of the present invention.

In relation to the aggregation function, it refers to a mathematical function having a pair of (or several) input operands from which an output value is produced. This aggregation function must satisfy, as it will be explained in later descriptions, the following mathematical properties: existence of neutral element, existence of inverse element, commutativity and associativity. An aggregation function is considered collision resistant in case of finding any two pair of input operands having the same output value is computationally difficult. The term collision applied to aggregation functions has not to be confused neither with collisions between processes nor with the term collision referred to hash functions.

This method may be applied to any type of sets of data, as for example to a single table or file, or to a whole database or file system, etc. Applying the method to a database (or to a file system) implies maximum interlace of data, so possibilities of reply attacks without detection are highly reduced.

Interlace of data refers to the level of concentration of control data for integrity verification purposes. For instance, a first file system comprising several files and one accumulator (control data) related to each file has lower concentration of control data for integrity verification than a second file system comprising said several files and only one accumulator (control data) globally related to said several files. Thus, it is considered that the first file system has lower interlace of data than the second file system.

The method is based on the existence of only one global hash value accumulator concentrating all the calculated hash values representing updating operations, so only replay attacks substituting the whole database (including the global hash value accumulator) by a previous backup of the database will not be detected by the method. Nevertheless, it is very difficult the attacker to have access to complete backups of the database, so probabilities of suffering malicious replay attacks substituting the entire database are insignificant.

This method requires minimum overload for each updating operation, since only two extra calculation steps are defined: calculating an operation hash value representing the updating operation and aggregating the operation hash value to the global hash value accumulator. The rest of calculations of the method (calculating an element hash value for each element, calculating an aggregated element hash value, and verifying the integrity of the set of data) are only executed when a condition for verifying the integrity of the set of data is satisfied.

Said condition for verifying the integrity may not be satisfied for each execution of an updating operation, but it may be satisfied periodically (e.g. once per hour) or depending on the number of executed updating operations (e.g. once after 1.000 new executions of updating operations), etc., according to specific verification condition parameters that can be defined by an administrator or similar profile of the system.

In conclusion, the method of the invention is efficient in terms of using very little extra memory (only the global hash value accumulator is stored) and in terms of requiring low extra processing capabilities for each updating operation (only the operation hash value calculation and its aggregation to the global hash value accumulator are executed). Moreover, security is very high because interlace of data is maximum (only one global hash value accumulator concentrating all the calculated hash values representing updating operations), so that probabilities of replay attacks without detection are highly reduced.

Preferably, applying a hash function to the updating operation comprises:
if the updating operation is insertion of an element:
   applying the hash function to the inserted element;
if the updating operation is deletion of an element:
   applying the hash function to the deleted element;
   calculating the inverse value of the result of applying the hash function
   to the deleted element;
if the updating operation is modification of an element:
   applying the hash function to the element before modification;
   calculating the inverse value of the result of applying the hash function to the element before modification;
   applying the hash function to the element after modification;
   aggregating the result of applying the hash function to the element after modification and the inverse value of the result of applying the hash function to the element before modification, by applying the aggregation function.

The application of the hash function to the updating operation as described in the previous paragraph implies that very few simple extra calculations for data integrity verification purposes are executed for each updating operation, so high efficiency of the method is ensured. More specifically, in case of insertion only one simple calculation is required, in case of deletion only two simple calculations are required, and in case of modification four simple calculations are executed.

In preferred embodiments of the invention, the method further comprises:
for each creation of a process in the system:
   defining a process hash value accumulator related to the created
   process;
aggregating the operation hash value to the global hash value accumulator comprises:
determining if the global hash value accumulator must be used for aggregation according to predetermined dispersion rules;
in case of positive result:
   aggregating the operation hash value to the global hash value
   accumulator by applying the aggregation function;
in case of negative result:
   aggregating the operation hash value to the process hash value accumulator related to the process executing the updating operation, by
   applying the aggregation function;
and comparing the aggregated element hash value and the global hash value accumulator comprises:
aggregating the global hash value accumulator and the process hash value accumulators by applying the aggregation function;
comparing the aggregated element hash value and the result of aggregating the global hash value accumulator and the process hash value accumulators.

As commented before, the global hash value accumulator refers to an accumulator related to the whole set of data (e.g. database or file system), so that any calculated operation hash value may be aggregated to said global hash value accumulator. Nevertheless, a particular accumulator related to each process executing updating operations (i.e. a process hash value accumulator related to each created process) may be used.

This feature has the advantage of increasing the flexibility of the method, since the operation hash value may be aggregated to the global hash value accumulator, implying maximum interlace of data, or to the process hash value accumulator related to the process executing the updating operation, implying better performance as will be explained in later descriptions. The predetermined dispersion rules define the conditions under which each calculated operation hash value is aggregated to the global hash value accumulator or to the process hash value accumulator related to the process executing the updating operation.

The combination of global accumulation (using the global hash value accumulator) and process related accumulation (using the corresponding process hash value accumulator) is particularly advantageous in concurrent systems wherein a database (or any other type of set of data) is concurrently updated by several processes. Said concurrence may be consequence of the system comprising multiple fibres, threads, processes, cores, CPUs, servers, etc., in which the set of data may be managed by means of databases with local or networked access, local or networked ad-hoc servers, shared local memory blocks, etc.

For example, if several processes require updating the global hash value accumulator at the same time, the general performance of the system can decrease because collisions between said processes are produced, so some of the processes can be waiting for a long time for the accumulator to be available or repeatedly trying to update the accumulator until it is available, etc. Depending on how are defined the dispersion rules, the inefficiency derived from possible collisions between processes may be minimized because, for example, some related operation hash values may be aggregated to the related process hash value accumulator instead of aggregated to the global hash value accumulator.

Aggregating the global hash value accumulator and the process hash value accumulators by applying the aggregation function refers to consolidate the different accumulators (global and process related accumulators) taking part in the method into a unique accumulator value in order to make possible its comparison with the aggregated element hash value and, then, verifying the integrity of the set of data according to the result of said comparison. The concept of consolidation will be more detailed in later descriptions.

In summary, the combination of global accumulation and process related accumulation, according to predetermined dispersion rules, has the big advantage of increasing the flexibility of the method in concurrent systems wherein a database (or any other type of set of data) may be updated by several processes at the same time, said flexibility making possible to achieve a good balance between performance of the system (reduction of collisions between processes) and security of the set of data (good interlace of data).

In another aspect of the invention, it is provided a system for verifying the integrity of a set of data in a system creating at least one process executing at least one updating operation on the set of data, the system comprising:
computer means for calculating an operation hash value representing the updating operation by applying a hash function to the updating operation;
computer means for aggregating the operation hash value to a global hash value accumulator by applying an aggregation function;
computer means for detecting a condition for verifying the integrity of the set of data is satisfied;
computer means for calculating an element hash value for each element of the set of data by applying the hash function to each element of the set of data;
computer means for calculating an aggregated element hash value by aggregating the calculated element hash values by applying the aggregation function;
computer means for verifying the integrity of the set of data by comparing the aggregated element hash value and the global hash value accumulator.

In a further aspect of the invention, the present invention relates to a computer program product comprising program instructions for causing a computer to perform the method for verifying the integrity of a set of data in a system creating at least one process executing at least one updating operation on the set of data. The invention also relates to such a computer program product embodied on a storage medium (for example, a CD-ROM, a DVD, a USB drive, on a computer memory or on a read-only memory) or carried on a carrier signal (for example, on an electrical or optical carrier signal).

### Brief description of the drawings

Particular embodiments of the present invention will be described in the following, only by way of non-limiting example, with reference to the appended drawings, in which:
FIG. 1 is a flow diagram of a method for verifying the integrity of a set of data in a system creating at least one process executing at least one updating operation on the set of data, according to an embodiment of the invention;
FIG. 2 is a flow diagram of calculating an operation hash value representing an updating operation by applying a hash function to the updating operation, according to an embodiment of the invention;
FIG. 3 is a flow diagram of a method for verifying the integrity of a set of data in a system creating at least one process executing at least one updating operation on the set of data, said method comprising global and process related accumulation, according to an embodiment of the invention;
FIG. 4 is a flow diagram of defining a process hash value accumulator related to each created process in the system, according to an embodiment of the invention.

### Detailed description of embodiments of the invention

In the following descriptions, numerous specific details are set forth in order to provide a thorough understanding of the present invention. It will be understood, however, to one skilled in the art, that the present invention may be practiced without some or all of these specific details. In other instances, well known elements have not been described in detail in order not to unnecessarily obscure the present invention.

Throughout the descriptions and claims the word "comprise" and variations of the word, are not intended to exclude other technical features, additives, components, or steps. Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

In the following descriptions, several particular references to elements related to the method and system of the invention may be used in order to avoid long descriptions and consequent possible confusions. The system creating at least one process executing at least one updating operation on the set of data may be also referenced as the main system, the system for verifying the integrity of the set of data may be also referenced as the integrity system, the method for verifying the integrity of the set of data may be also referenced as the integrity method, the computer program product comprising program instructions for causing a computer to perform the integrity method may be also referenced as the integrity computer program, the set of data the integrity of which is to be verified by the integrity method may be also referenced as the protected data, and the global hash value accumulator and/or process hash value accumulators and/or derived data (as for example signatures of the global and/or process hash value accumulators) may be also globally referenced as integrity control data.

In some embodiments of the invention, the main system may comprise an embodiment of the integrity system which may comprise an integrity computer program able to perform an embodiment of the integrity method. In other words, the main system may comprise the necessary infrastructure or technological environment for implementing an embodiment of the integrity system comprising an integrity computer program being able to perform an embodiment of the integrity method. For instance, the main system may comprise a computer shared with the integrity system, said computer being able to store and execute program instructions performing embodiments of the integrity method.

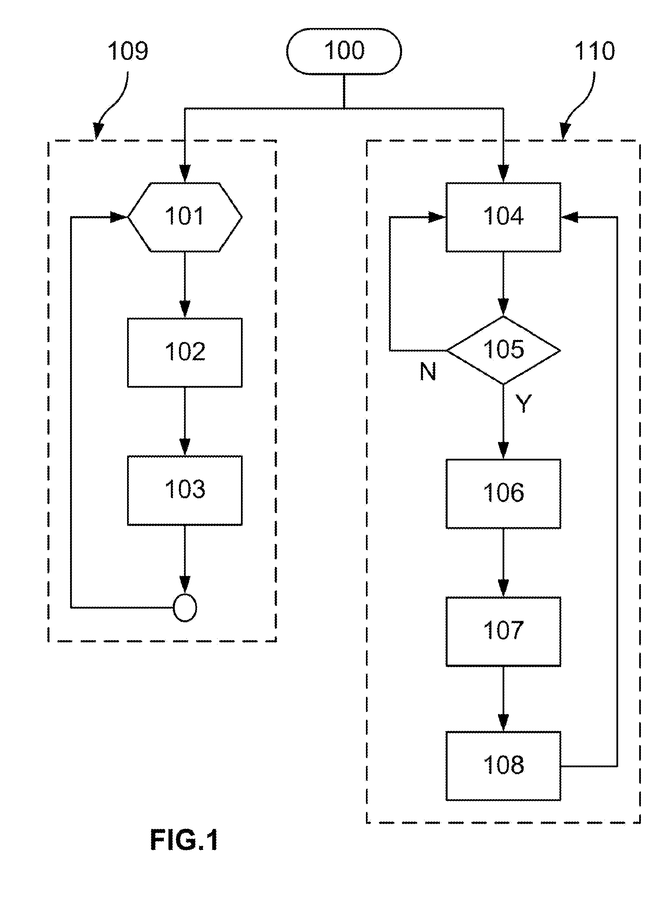

The main system may also comprise a repository comprising (or storing) the protected data and the integrity control data, even though the protected data and the integrity control data may be comprised (or stored) in separated repositories comprised in the main system. Even, the main system and the integrity system may be separated systems comprising separated repositories for storing the protected data and the integrity control data, in said case distributed processes may be defined for coordinating the main and the integrity system according to the inherent requirements of the invention. Figure 1 illustrates a flow diagram of an embodiment of the integrity method, wherein starting 100 the integrity method produces initiation of the following two sub-methods.

A first sub-method 109 comprising:
for 101 each updating operation executed by a process created in the main system:
   calculating 102 an operation hash value representing the updating operation by applying a hash function to the updating operation;
   aggregating 103 the operation hash value to a global hash value accumulator by applying an aggregation function.

A second sub-method 110 comprising:
retrieving 104 verification condition parameters;
verifying 105 if a condition for verifying the integrity of the set of data is satisfied according to the retrieved verification condition parameters;
in case of positive result:
   calculating 106 an element hash value for each element of the set of data by applying the hash function to each element of the set of data;
   calculating 107 an aggregated element hash value by aggregating the calculated element hash values by applying the aggregation function;
   verifying 108 the integrity of the set of data by comparing the aggregated element hash value and the global hash value accumulator;
in case of negative result:
   transferring the control of the sub-method 110 to retrieving 104 verification condition parameters.

The first sub-method 109 is represented in Figure 1 through a combination of a hexagon (101), several squares (102, 103), a small circle (without reference), and several arrows connecting them. Said combination represents the well known iterative control structure "For", wherein an iteration of the actions represented by the squares (102, 103) is executed each time a condition represented by the hexagon (101) is satisfied. In this case, said condition is satisfied when an updating operation is executed by a process.

Calculating 102 the operation hash value representing the updating operation refers to obtaining a probabilistic identification of the updating operation within a limited space of values (as for example a subset of the natural numbers) and univocally identifying the updating operation. Thus, a hash function is applied to the updating operation (or to data related to the updating operation) for obtaining said probabilistic identification (the operation hash value).

Aggregating 103 the operation hash value to the global hash value accumulator by applying an aggregation function may be represented through the following formula: *X∘Y=Z,* wherein o is the aggregation function, *X* is the operation hash value, *Y* is the value of the global hash value accumulator before the aggregation 103 and *Z* is the value of the global hash value accumulator resulting from the aggregation 103.

The global hash value accumulator may be a data (or field) comprised in a separated or in the same repository (or database or file system) comprising or storing the protected data. In any case, the type of said data representing the global hash value accumulator will be consistent with the type of values generated by the hash function. For example, if the hash function returns natural numbers, the type of the data representing the global hash value accumulator may be a natural number or an integer number or any other type of numbers comprising the natural numbers.

Conceptually, *Y* may be understood as representing the combination of updating operations previously processed by the sub-module 109 *(U0*1*,U0*2) and *X* may be understood as representing the updating operation that is being processed by the sub-module 109 (*UO*3). Therefore, Z may be understood as representing the combination of the updating operation *U0*3 and the previously processed updating operations *UO*1,*UO*2. That is to say, *Z* may be understood as representing the combination of the updating operations *UO*1,*UO*2 and *UO*3.

Thus, if considering that *OH*1 is the operation hash value of *UO1, OH2* is the operation hash value of *U0*2 and OH3 is the operation hash value of *U0*3 , it may be understood that Y is the result of *OH*1∘*OH*2*, X* is OH3 and Z is the result of *OH*3∘(*OH*1∘*OH*2).

Calculating 106 an element hash value for each element of the set of data by applying the hash function to each element of the set of data, refers to applying the same hash function used in the sub-module 109 to each element of the set of data. For instance, considering that the set of data comprises the elements *EL*1*, EL*2 and *EL*3, calculating 106 the element hash value for each element of the set of data produces the element hash values *EH*1, *EH*2 and *EH*3 , wherein *EH*1 is the result of applying the hash function to *EL*1*, EH*2 is the result of applying the hash function to *EL*2 , and *EH*3 is the result of applying the hash function to *EL*3*.*

According to the same example, calculating 107 an aggregated element hash value by aggregating the calculated element hash values by applying the aggregation function, refers to obtaining the result of executing the following calculation: *EH*1∘*EH*2∘*EH*3.

Verifying 108 the integrity of the set of data by comparing the aggregated element hash value and the global hash value accumulator, refers to determining whether the set of data is integral depending on the result of comparing the aggregated element hash value and the global hash value accumulator. In case of the aggregated element hash value and the global hash value accumulator being equal (i.e. comprising identical values), the integrity of the set of data is confirmed, that is to say, the set of data is considered integral and, thus, it is concluded that the set of data has not been affected by malicious manipulations. In case of the aggregated element hash value and the global hash value accumulator not being equal (i.e. not comprising identical values), the integrity of the set of data is not confirmed and, thus, it is concluded that the set of data could have been affected by malicious manipulations.

According to the previous examples, wherein the global hash value accumulator finally contains the result of *OH*3∘(*OH*1∘*OH*2) and calculating 107 an aggregated element hash value produces the result of *EH*1∘*EH*2∘*EH*3*,* verifying 108 the integrity of the set of data refers to determining whether the set of data is integral or not by comparing the result of *OH*3∘(*OH*1∘*OH*2) and the result of *EH*1*∘EH*2*∘EH*3*.*

The integrity method of the invention is robust when used in transactional environments. Said robustness refers to the protected data and the integrity control data remaining integral even in case of some failure in the main system and/or in the integrity system. Then, for instance, execution of an updating operation, calculating 102 an operation hash value representing the updating operation and aggregating 103 the operation hash value to the global hash value accumulator may be defined in a common transaction, so that the result of executing said three operations (updating operation, calculation 102 and aggregation 103) are committed (or confirmed) only and only when said three actions have been successfully executed.

Without said transactional approach, a failure in the main system or in the integrity system between, for example, the execution of the updating operation and the aggregation 103 of the operation hash value to the global hash value accumulator could produce successful execution of the updating operation and failed aggregation 103, so inconsistencies between the protected data and the global hash value accumulator may be generated.

Moreover, when verifying 105 if a condition for verifying the integrity of the set of data is satisfied produces a positive result, the sub-method 110 may cause interrupting the execution of updating operations and the related iterations 101-102-103 of the sub-method 109 in order to ensure consistency between protected data and integrity control data during the execution of calculating 106 an element hash value, calculating 107 an aggregated element hash value and verifying 108 the integrity of the set of data. The sub-method 110 may cause resuming the execution of updating operations and the related iterations 101-102-103 of the sub-method 109 once the sequence 106-107-108 has been successfully executed.

This feature based on interrupting-resuming executions may be important in non-transactional environments, since consistency between protected data and integrity control data may not be ensured during the execution of the sequence 106-107-108. In a transactional environment or system, a read transaction may be defined for executing the sequence 106-107-108, said read transaction being configured for reading protected data and integrity control data without any interference from the execution of different instances of the sequence "updating operation-101-102-103" during the execution of said read transaction. Said configuration of the read transaction may cause, for example, reading protected data and integrity control from a consistent snapshot of said protected data and integrity control data.

In some embodiments, the verification condition parameters may be defined by an administrator or similar profile of the main and/or integrity system and may comprise data referred to timing criteria under which the condition for verifying the integrity is satisfied. The condition for verifying the integrity may be periodically satisfied, as for example, once per hour (at 00:00h, 01:00h, 02:00h ... 23:00h), so that the verification of the integrity is launched 24 times per day. It may be also possible to define time intervals in which the regularity of the satisfaction of the condition for verifying the integrity may be different depending on said time intervals, as for example four times per hour from 08:00h to 20:00h and once per hour from 20:01 h to 07:59h.

In particular embodiments, the verification condition parameters may comprise data referred to load or performance criteria under which the condition for verifying the integrity is satisfied. The condition for verifying the integrity may be satisfied depending on the number of executed updating operations, as for example once after 1.000 new executions of updating operations. The condition for verifying the integrity may also be satisfied depending on the executed number of accesses (reading and updating operations) to the protected data or to the integrity control data, etc., or depending on any kind of parameter indicating performance of the main and/or integrity system, in a way that detection of low performance may cause decreasing the regularity of satisfaction of the condition for verifying the integrity or detection of high performance may cause increasing the regularity of satisfaction of the condition for verifying the integrity.

In preferred embodiments, the verification condition parameters may comprise data referred to security criteria under which the condition for verifying the integrity is satisfied. The protected data may be segmented according to different levels of security criteria. For example, most sensitive data may be assigned to a segment with maximum security level, so that the regularity of satisfaction of the condition for verifying integrity may be very high (e.g. every 10 minutes), whereas less sensitive data may be assigned to a segment with minimum security level for which the regularity of satisfaction of the condition for verifying integrity may be lower.

In other embodiments, the verification condition parameters may comprise data referred to any combination of timing criteria, load or performance criteria and security criteria as individually defined in the previous paragraphs. For example, a combination of said three criteria may be implemented through a multi-dimensional array, wherein each dimension of the array may correspond to one of said timing, performance or security criteria and each cell of the array may comprise particular rules about satisfaction of the condition for verifying integrity to be applied depending on each particular combination of timing, performance and/or security criteria.

In case of the global hash value accumulator not being comprised in the same repository that the protected data, distributed transactions may be defined in order to warranty the consistency between the protected data and the global hash value accumulator. For instance, execution of an updating operation, calculating 102 an operation hash value representing the updating operation and aggregating 103 the operation hash value to the global hash value accumulator may be defined in a common distributed transaction, so that the result of executing said three operations (updating operation, calculation 102 and aggregation 103) are committed only and only when said three actions have been successfully executed.

The coordination between the main system and the integrity system may be implemented by sending and receiving integrity parameters between the main and the integrity system. For example, when an updating operation is executed, the main system may send integrity parameters identifying the executed updating operation to the integrity system, in said case the integrity system would execute a new iteration of the structure 101-102-103 of the sub-module 109 according to the received integrity parameters. Once said new iteration has been successfully executed, the integrity system may send an OK notification to the main system which would commit the whole transaction comprising the updating operation and the related new iteration of the structure 101-102-103 of the sub-module 109.

The coordination between the main system and the integrity system may also be implemented by the main system making calls to integrity modules comprised in the integrity system. For example, when an updating operation is executed, the main system may execute a call with integrity parameters to an integrity module implementing a new iteration of the structure 101-102-103 of the sub-module 109 according to the received integrity parameters. Once said new iteration has been successfully executed, the integrity module may return an OK value to the main system which would commit the whole transaction comprising the updating operation and the related new iteration of the structure 101-102-103 of the sub-module 109.

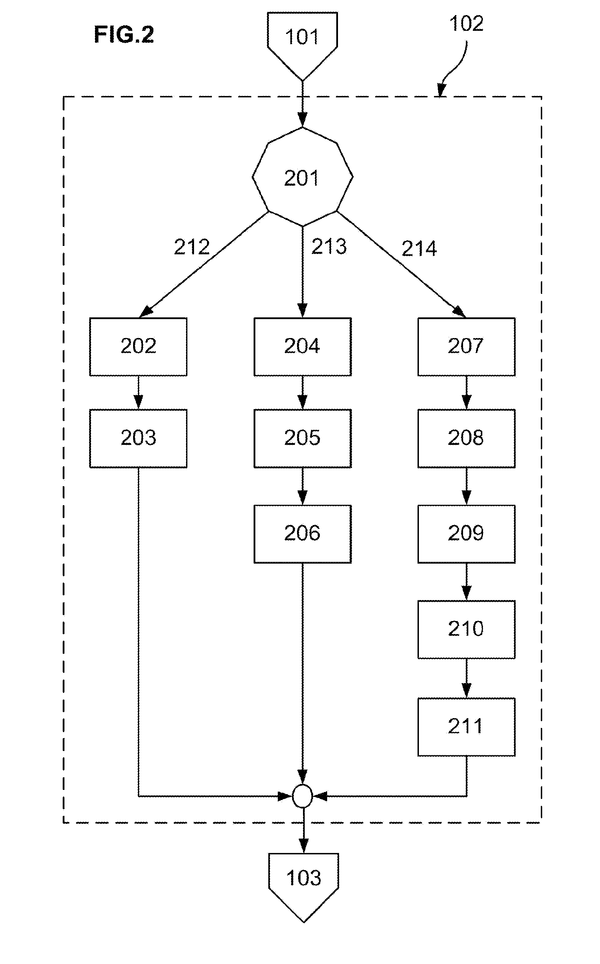

Figure 2 illustrates a flow diagram of calculating 102 an operation hash value representing the updating operation by applying a hash function to the updating operation, according to an embodiment of the invention, comprising:
determining 201 the type of the updating operation;
   in case of the updating operation being insertion 212 of an element:
      applying 202 the hash function to the inserted element;
      taking 203 the result of the application 202 as the operation hash value;
   in case of the updating operation being deletion 213 of an element:
      applying 204 the hash function to the deleted element;
      calculating 205 the inverse value of the result of applying the hash function to the deleted element;
      taking 206 the result of the calculation 205 as the operation hash value;
   in case of the updating operation being modification 214 of an element:
      applying 207 the hash function to the element before modification;
      calculating 208 the inverse value of the result of applying the hash function to the element before modification;
      applying 209 the hash function to the element after modification;
      aggregating 210 the result of applying the hash function to the element after modification and the inverse value of the result of applying the hash function to the element before modification, by applying the aggregation function;
      taking 211 the result of the aggregation 210 as the operation hash value.

Calculating 102 an operation hash value representing the updating operation is represented in Figure 2 through a combination of an octagon (201), several squares (202 to 211), a small circle (without reference), and several arrows connecting them. Said combination represents the well known multiple choice control structure, wherein a specific sequence of squares (202 to 203, or 204 to 206 or 207 to 211) is executed depending on the satisfied option (212 or 213 or 214) according to the expression represented by the octagon (201).

Therefore, according to said Figure 2, applying the hash function to the updating operation may comprise applying the hash function to the inserted data (in case of insertion) or applying the hash function to the deleted data (in case of deletion) or applying the hash function to the data before modification and to the data after modification (in case of modification). Moreover, in case of deletion and modification, inverse values may also be calculated and, in case of deletion, the aggregation function may also be applied.

Calculating 102 the operation hash value representing the updating operation may comprise, in case of deletion, calculating the inverse value of the result of applying the hash function to the deleted element and aggregating said inverse value to the global hash value accumulator by applying the aggregation function. Hence, in this embodiments, the aggregation function must satisfy the inverse element property: ∃*a*⁻¹∈*I*|*a∘a*⁻¹=0,∀*a*∈*I*, wherein *I* is the set of all the possible values that the hash function can produce and 0 is the neutral element. Moreover, the aggregation function should also satisfy the neutral element property because the inverse element property is defined assuming the existence of the neutral element (0).

According to the example of the previous paragraph, a may be understood as representing the operation hash value related to inserting an element, and *a*⁻¹ may be understood as representing the operation hash value related to deleting said element, so that the result of the aggregation *a∘a*⁻¹ produces the neutral element which may be understood as representing nothing in the global hash value accumulator. That is to say, the aggregation of the inverse value *a*⁻¹ to the global hash value accumulator may be understood as producing cancellation of a previous insertion represented by the aggregation of the value *a* to the global hash value accumulator.

Between said insertion represented by the aggregation of the value *a* to the global hash value accumulator and said deletion represented by the aggregation of the inverse value *a*⁻¹ to the global hash value accumulator, some other updating operations may have been executed, in said case the global hash value accumulator may be the result of the following calculations: a∘*b*.*..*∘*c∘a*⁻¹=*b...∘c∘*(*a∘a*⁻¹)=*b...∘c∘*0=*b...∘c*, wherein *b*...∘*c* represents other updating operations executed between the insertion (*a*) and the deletion (*a*⁻¹). Thus, it is directly derived that the aggregation function must also satisfy the commutative and associative properties in the embodiments illustrated through Figure 2.

For best understanding, a simple example of execution of an embodiment of the integrity method according to Figure 2 will be described considering the following initial situation:
Aggregation function is + (addition);
Protected data = {} (empty);
Global hash value accumulator = 0 (zero, neutral element of addition).

Insertion of the element A , assuming a as the result of applying the hash function to A , produces the following new situation:
Protected data contains {*A*};
Global hash value accumulator = a .

Insertion of the element B , assuming b as the result of applying the hash function to B , produces the following new situation:
Protected data contains *{A,B};*
Global hash value accumulator = *a*+*b*.

Modification *of B* by C, assuming c as the result of applying the hash function to C, produces the following new situation:
Protected data contains {*A*,*C*};
Global hash value accumulator = *a+b+c+b⁻¹* = *a+c.*

Insertion of the element D, assuming d as the result of applying the hash function to D, produces the following new situation:
Protected data contains *{A,C,D};*
Global hash value accumulator = *a*+*c*+*d*.

Deletion of A produces the following new situation:
Protected data contains *{C,D};*
Global hash value accumulator = *a+c+d+a⁻¹* = *c+d .*

Then, if a condition for verifying the integrity of the set of data is satisfied, the following operations are executed:
calculating 106 an element hash value for each element of the set of data {C,D} by applying the hash function to each element of the set of data, that generates the element hash values *c* and *d* ;
calculating 107 an aggregated element hash value by aggregating the calculated element hash values by applying the aggregation function, that produces the result of *c+d* as the aggregated element hash value;
verifying 108 the integrity of the set of data by comparing the aggregated element hash value (*c*+*d*) and the global hash value accumulator *(c+d ),* that may produce a signal indicating that the set of data is integral because the aggregated element hash value and the global hash value accumulator are equal or contain identical value.

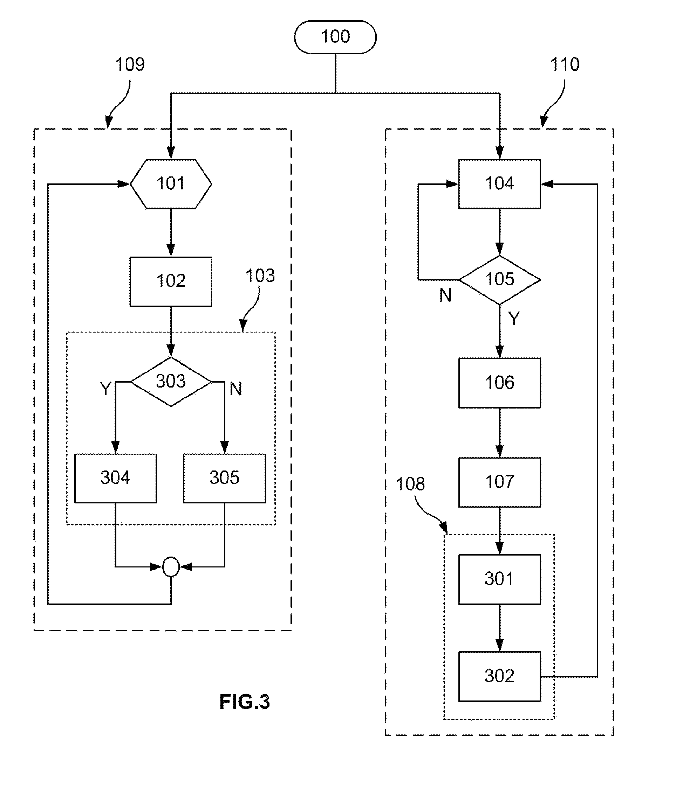

Figure 3 illustrates a flow diagram of an embodiment of the integrity method based on global and process related accumulation, wherein starting 100 the integrity method produces initiation of the following two sub-methods.

A first sub-method 109 comprising:
for 101 each updating operation executed by a process created in the main system:
   calculating 102 an operation hash value representing the updating operation by applying a hash function to the updating operation;
   verifying 303 if the global hash value accumulator must be used for aggregation according to predetermined dispersion rules;
   in case of positive result:
      aggregating 304 the operation hash value to the global hash value accumulator by applying the aggregation function;
   in case of negative result:
      aggregating 305 the operation hash value to the process hash value accumulator related to the process executing the updating operation, by applying the aggregation function;

A second sub-method 110 comprising:
retrieving 104 verification condition parameters;
verifying 105 if a condition for verifying the integrity of the set of data is satisfied according to the retrieved verification condition parameters;
in case of positive result:
   calculating 106 an element hash value for each element of the set of data by applying the hash function to each element of the set of data;
   calculating 107 an aggregated element hash value by aggregating the calculated element hash values by applying the aggregation function;
   aggregating 301 the global hash value accumulator and the process hash value accumulators by applying the aggregation function;
   verifying 302 the integrity of the set of data by comparing the aggregated element hash value and the result of aggregating the global hash value accumulator and the process hash value accumulators;
in case of negative result:
   transferring the control of the sub-method 110 to retrieving 104 verification condition parameters.

The predetermined dispersion rules may comprise dispersion parameters defining the conditions under which each calculated operation hash value is aggregated to the global hash value accumulator or to the process hash value accumulator related to the process executing the updating operation. For example, said dispersion parameters may refer to how long a process can be waiting for the global hash value accumulator to be available, or how many attempts updating the global hash value accumulator a process can execute before finally aggregating to its related process hash value accumulator instead of aggregating to the global hash value accumulator.

The dispersion parameters may define when a process must abandon the global hash value accumulator and starting (or restarting) aggregation into its related process hash value accumulator, depending on, for example, timing criteria, performance criteria, security criteria or any combination of said timing, performance and security criteria. Further, the dispersion parameters may also define when a process must abandon its related process hash value accumulator and starting (or restarting) aggregation into the global hash value accumulator, depending on, for example, timing criteria, performance criteria, security criteria or any combination of said timing, performance and security criteria.

Thus, the dispersion parameters may comprise data referred to any combination of timing criteria, load or performance criteria and security criteria. For example, a combination of said three criteria may be implemented through a multi-dimensional array, wherein each dimension of the array may correspond to one of the cited criteria (timing, performance, security) and each cell of the array may comprise data defining particular actions to be applied depending on each combination of timing, performance and security criteria.

Said multi-dimensional array implementing the dispersion parameters may also comprise a dimension defining different categories of processes that can be created in the main system, so that each cell of the array may comprise data defining particular actions to be applied depending on said categories of processes. For example, processes updating highly sensitive data may have maximum priority for aggregating to the global hash value accumulator (i.e. maximum interlace of data), whereas processes updating low sensitive data may have minimum priority for aggregating to the global hash value accumulator (i.e. minimum interlace of data). This dimension "categories of processes" may also be combined with any of the abovementioned timing, performance and security dimensions.

When a process is aggregating into its related process hash value accumulator, the interlace of data decreases, so processes updating a segment of very sensitive protected data may be related to a very high level security for ensuring very high interlace of data, in a way that aggregations into its related process hash value accumulator will be minimum. But in intervals of very bad performance, the administrator may decide to improve performance by decreasing security through conveniently adjusting the dispersion parameters.

The performance criteria, defined through the corresponding dispersion parameters, may refer to the number of collisions between processes executing updating operations. Said collisions may be managed by a transactional monitor in charge of detecting said collisions and communicating them to the main system and/or to the integrity system. Nevertheless, the collisions between processes may be detected by applying Test and set protocols or block based approaches.

Test and set protocols refer to trying to execute an updating operation and, in case of failed execution, new instances of the updating operation may be executed until the updating operation is successfully executed or a maximum number of attempts (or instances) is reached or a timing threshold is reached, said maximum number of attempts and/or timing threshold being defined in the dispersion parameters.

Block based approaches refers to processes blocking data before executing an updating operation on said data, so that other processes trying to execute other updating operations on said data firstly verify if data to be updated is blocked or not. Then, in case of data being blocked, the process may execute new instances of the updating operation until the data become unblocked or a maximum number of instances are reached or a timing threshold is reached, said maximum number of attempts and/or timing threshold being defined in the dispersion parameters.

The collisions between processes may also be consequence of several processes trying to update the global hash value accumulator at the same time. In this case, any of the abovementioned solutions based on a transactional manager or Test and set protocols or block based approaches may be applied. It must be understood that updating the global hash value accumulator is comprised in any action or operation or calculation giving as result a new value for the global hash value accumulator, as for example: aggregating 103 the operation hash value to the global hash value accumulator by applying an aggregation function.

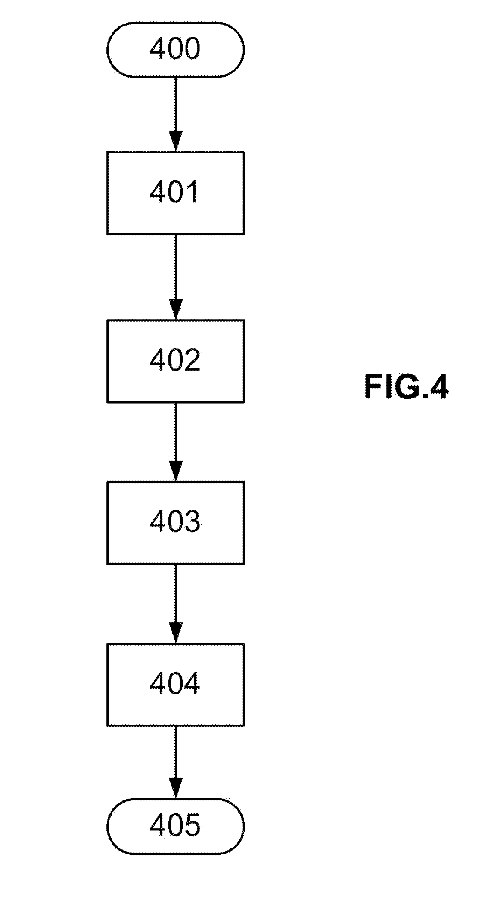

Figure 4 illustrates a flow diagram of an embodiment of defining a process hash value accumulator related to a created process in the system, comprising:
creating 401 the process hash value accumulator;
initializing 402 the created process hash value accumulator with a random value;
calculating 403 the inverse value of the initialized process hash value accumulator;
aggregating 404 the inverse value of the initialized process hash value accumulator to the global hash value accumulator by applying the aggregation function.

In comparison with a standard initialization based on the neutral element, the initialization based on the random value requires two extra simple calculations:
calculating the inverse value of the initialized process hash value accumulator;
aggregating the inverse value of the initialized process hash value accumulator to the global hash value accumulator by applying the aggregation function.

The reason for this is that the random value assigned to the process hash value accumulator represents a not real insertion of a "virtual" element in the protected data. Thus, in order to maintain the consistency between said process hash value accumulator and the global hash value accumulator, the two mentioned extra simple calculations have to be executed. More particularly, the not real insertion of the "virtual" element represented by the initialization of the created process hash value accumulator with a random value is compensated with a not real deletion of the "virtual" element represented by the aggregation of the inverse value of the initialized process hash value accumulator to the global hash value accumulator.

The definition of a process hash value accumulator related to the created process as described in figure 4 increases the difficulty for potential attackers when defining attacks to the protected data and its integrity, since said definition of the process hash value accumulator implies interlacing or connecting the process hash value accumulator with the global hash value accumulator through the abovementioned "virtual" element. In case of the process hash value accumulator being initialized with the neutral element, an attacker could identify protected data generated by the process related to the process hash value accumulator and delete said protected data and initialize the process hash value accumulator with the neutral element, in which case the integrity method would not detect said attack, since the process hash value accumulator is not interlaced with the global hash value accumulator.

In conclusion, the initialization based on the random value is less efficient than the initialization based on the neutral element, but said initialization based on the random value is preferred because has the big advantage of providing higher security against possible attacks to protected data and its integrity.

Defining a process hash value accumulator related to a created process in the main system as defined through Figure 4 may also apply a transactional approach, as described before in reference to Figure 1, for ensuring the integrity between the new process hash value accumulator and the global hash value accumulator.

Aggregating 404 the inverse value of the initialized process hash value accumulator to the global hash value accumulator comprises updating the global hash value accumulator, so collisions between several processes may be produced when said processes trying to execute said aggregation 404 at the same time, so considerations about collisions between processes previously explained may also be applied in this case.

Preferably, the integrity method further comprises:
when final consolidation of at least one process hash value accumulator is requested according to predetermined consolidation rules:
   aggregating the process hash value accumulator to the global hash value accumulator;
   eliminating the process hash value accumulator.

Consolidation of a process hash value accumulator refers to "transferring" the value of said process hash value accumulator to the global hash value accumulator by aggregating the process hash value accumulator to the global hash value accumulator. For example, if the global hash value accumulator represents the updating operations *UO1* and *UO*2, and the process hash value accumulator represents the updating operations U03 and U04, the consolidation of the process hash value accumulator produces a new content for the global hash value accumulator representing the updating operations *UO1, UO2,* U03 and *UO*4.

Final consolidation of a process hash value accumulator refers to the consolidation of the process hash value accumulator in a way that the process hash value accumulator is eliminated, i.e. it is no more available for the related process aggregating operation hash values. Therefore, after a process aggregating operation hash values to its related process hash value accumulator for performance reasons, the process hash value accumulator may be completely consolidated for increasing the interlace of data (i.e. security). Final consolidation of a process hash value accumulator may be requested when execution of its related process is completed, so that the value of the process hash value accumulator is definitively transferred to the global hash value accumulator.

The predetermined consolidation rules may comprise consolidation parameters defining the conditions under which a process hash value accumulator has to be consolidated. For example, the consolidation parameters may comprise the conditions under which final consolidation of the process hash value accumulator is requested. Said final consolidation conditions may not be satisfied for each execution of an updating operation, but it may be satisfied periodically (e.g. once per hour) or depending on the number of executed updating operations (e.g. once after 1.000 new executions of updating operations) or depending on the rate of collisions between processes in predefined intervals, etc. The consolidation parameters may be monitored and adjusted, for example, by an administrator of the system or equivalent profile in order to achieve the best balance between performance and security.

Final consolidation may also apply a transactional approach, as described before in reference to Figure 1, for ensuring consistency of integrity control data. For instance, aggregating the process hash value accumulator to the global hash value accumulator and eliminating the process hash value accumulator may be defined in the same transaction, so that the result of executing said two operations (aggregating the process hash value accumulator to the global hash value accumulator and eliminating the process hash value accumulator) are committed only and only when said two operations have been successfully executed.

Moreover, aggregating the process hash value accumulator to the global hash value accumulator comprises updating the global hash value accumulator, so collisions between several processes may be produced when said processes trying to execute said aggregation of the process hash value accumulator to the global hash value accumulator at the same time, so considerations about collisions between processes previously explained may also be applied in this case.

In preferred embodiments, the integrity method further comprises:
when halfway consolidation of at least one process hash value accumulator is requested according to predetermined consolidation rules:
   initializing the process hash value accumulator with a random value;
   calculating the inverse value of the process hash value accumulator after initialization;
   aggregating the process hash value accumulator before initialization and the inverse value of the process hash value accumulator after initialization to the global hash value accumulator, by applying the aggregation function.

Halfway consolidation refers to consolidating a process hash value accumulator without eliminating said process hash value accumulator, so that it remains available for its related process. Halfway consolidation of a process hash value accumulator is useful for increasing interlace of data when the related process is still in execution. Halfway consolidation allows "transferring" the value of the process hash value accumulator to the global hash value accumulator in a way that the process hash value accumulator remains available for its related process. During execution of a process there can be intervals of numerous collisions with other processes and intervals in which collisions are insignificant for the performance of the system, so that a good combination of dispersion and consolidation rules may produce optimal interlace of data (i.e. security) and number of collisions (i.e. performance) along said cycles alternating intervals of high and low rates of collisions.

Then, different intervals of high and low rates of collisions between processes may be estimated by an administrator or similar profile in order to define dispersion and consolidation rules to achieve a good balance between performance and security. For example, a first time interval (e.g. during day) may be defined comprising dispersion rules producing lower interlace of data and a second interval (e.g. during night) comprising dispersion rules producing higher interlace of data. Then, a consolidation rule comprising the halfway consolidation of all the existing process hash value accumulators may be defined as transition from the first time interval to the second time interval, so that the interlace of data becomes maximum at the beginning of the second time interval.

The predetermined consolidation rules may comprise consolidation parameters defining the conditions under which halfway consolidation of a process hash value accumulator is requested. Said halfway consolidation conditions may not be satisfied for each execution of an updating operation, but it may be satisfied periodically (e.g. once per hour) or depending on the number of executed updating operations (e.g. once after 1.000 new executions of updating operations) or depending on the rate of collisions between processes in predefined intervals, etc.

The same principles described for defining the verification condition parameters may also be applied to the consolidation parameters. That is to say, the consolidation parameters may comprise data referred to any combination of timing criteria, load or performance criteria and security criteria. For instance, combinations of said three criteria may be implemented through a multi-dimensional array wherein each cell of the array corresponds to particular consolidation conditions related to a determined combination of time, performance and security levels.

Said multi-dimensional array implementing the consolidation parameters may also comprise a dimension defining different categories of processes that can be created in the main system, so that each cell of the array may comprise data defining particular actions to be applied depending on said categories of processes. For example, processes updating high sensitive data may have maximum consolidation frequency, whereas processes updating low sensitive data may have minimum consolidation frequency. This dimension "categories of processes" may also be combined with any of the abovementioned timing, performance and security dimensions.

Initializing the process hash value accumulator with a random value represents a not real insertion of a "virtual" element in the set of data. Thus, in order to maintain the consistency between said process hash value accumulator and the global hash value accumulator, two extra calculations have to be executed:
calculating the inverse value of the process hash value accumulator after initialization;
aggregating the process hash value accumulator before initialization and the inverse value of the process hash value accumulator after initialization to the global hash value accumulator, by applying the aggregation function.

The not real insertion of the "virtual" element represented by the initialization of the process hash value accumulator with a random value is compensated with a not real deletion of the "virtual" element represented by the aggregation of the inverse value of the process hash value accumulator after initialization to the global hash value accumulator.

The aggregation of the process hash value accumulator before initialization to the global hash value accumulator represents the consolidation of the process hash value accumulator, that is to say, refers to "transferring" the value of said process hash value accumulator before initialization to the global hash value accumulator. For example, if the global hash value accumulator represents the updating operations *UO*1 and *UO*2, and the process hash value accumulator before initialization represents the updating operations U03 and U04, the consolidation of the process hash value accumulator produces a new content for the global hash value accumulator representing the updating operations *UO*1, *UO*2*, UO*3 and *UO*4*.*

In conclusion, the possibility of halfway consolidating process hash value accumulators provides the integrity method of the invention with very high flexibility for dynamically increasing interlace of data without eliminating said process hash value accumulators, so different intervals with different levels of interlace of data and different rates of collisions between processes may be alternated for achieving the best balance between performance and security.

Halfway consolidation may also apply a transactional approach, as described before in reference to Figure 1, for ensuring the integrity of integrity control data. Moreover, aggregating the process hash value accumulator before initialization and the inverse value of the process hash value accumulator after initialization to the global hash value accumulator comprises updating the global hash value accumulator, so collisions between several processes may be produced when said processes trying to execute said aggregation of the process hash value accumulator before initialization and the inverse value of the process hash value accumulator after initialization to the global hash value accumulator at the same time, so considerations about collisions between processes previously explained may also be applied in this case.

In preferred embodiments of the invention, the hash function is a non keyed hash function (for example: SHA-1, SHA-256, binary representation, etc.) and the aggregation function is a collision resistant aggregation function (for example: multiplication modulo a prime number, etc.). The application of a collision resistant aggregation function increases the difficulty for an attacker to obtain some "malicious" data that inputted to the collision resistant aggregation function produces the same result that the application of the collision resistant aggregation function to some protected data, so that said protected data could be substituted by said "malicious" data with no possibilities of detection by the integrity method. Then, this "non keyed hash and collision resistant aggregation approach" improves security of the integrity method (thanks to the collision resistant aggregation) and, besides, offers the possibility of external personnel (for example, an auditor) verifying the integrity (thanks to the hash function without secret key).

Alternatively to the "non keyed hash and collision resistant aggregation approach", the hash function may be a keyed hash function (for example: DES-MAC, SHA-MAC, etc.) and the aggregation function may be a non collision resistant aggregation function (for example: addition modulo a natural number, etc.). This "keyed hash and non collision resistant aggregation approach" has the big advantages of providing very high security (thanks to the keyed hash, using a secret key) and of being more efficient than the "non keyed hash and collision resistant aggregation approach" (thanks to the non collision resistant aggregation). Nevertheless, in this case, verification of the integrity by external personnel (for example, an auditor) is not possible unless the secret key used by the keyed hash function is shared with said external personnel.

In preferred embodiments of the invention, the integrity method may also comprise initializing the global hash value accumulator with a random value, according to, for example, the essentials of Initialization Vector (IV - well known concept in cryptography). This random initialization of the global hash value accumulator could be understood as an initial not real insertion of a "virtual" element, which identifies or individualizes the repository comprising (or storing) the protected data in front of malicious insertions from attackers. In case of the global hash value accumulator being initialized with the neutral element, an attacker could identify protected data generated in the main system and delete said protected data, producing an empty repository, and initialize the global hash value accumulator with the neutral element, in which case the integrity method would not detect said attack, since the global hash value accumulator is not randomly initialized.

Any computing system, as for example the main system and/or the integrity system, normally comprises an execution memory (e.g. RAM ― Random Access Memory) wherein each process in execution temporally stores related data during its execution. Execution memory has to be differentiated from the repository on which protected data and integrity control data may be permanently stored, said "permanent memory" being normally known as disk memory. It is commonly accepted that execution memory is secure in the sense of malicious accesses (e.g. by an attacker) to sensible data (e.g. accumulators) stored on said execution memory are considered very difficult, whereas disk memory is considered not secure enough. In other words, for an attacker it is much more difficult to obtain sensible data from execution memory (secure) than from disk memory (not secure enough).

Therefore, extra protection measures (e.g. signing, encrypting, etc.) may be applied to accumulators (either global or process related) when stored on disk memory, but said extra protection measures may not make sense when accumulators are stored on execution memory. Since the global hash value accumulator may be accessed by several processes in execution, the global hash value accumulator may permanently be stored on disk memory in order to the global hash value accumulator being accessible to all said processes in execution. A process hash value accumulator is only accessed by its related process, so each process hash value accumulator may be stored on execution memory during the execution of its related process, unless some exceptional situation is produced.

Examples of exceptional situations are: interruption and resume of processes, failure of processes, etc. Interruption of a process may comprise storing its related process hash value accumulator on disk memory in order to make possible the interrupted process reusing its related process hash value accumulator when resumed. Management of a process failure may comprise storing its related process hash value accumulator on disk memory in order to make possible validation of the integrity or halfway consolidation of the process hash value accumulator. Thus, the integrity computer program may be implemented in a way that storage of process hash value accumulators on disk memory may be occasional, so application of extra protection measures (e.g. signing, encrypting, etc.) to process hash value accumulators will be minimum.

Any process in execution (and the integrity method) may know if its related process hash value accumulator is stored on execution memory or not. Then, in case of the process hash value accumulator not being stored on execution memory (i.e. stored on disk memory), some extra protection measures may be executed on the process hash value accumulator for increasing security of the integrity method.

In some embodiments, the integrity method further comprises signing the global hash value accumulator by applying a signature function; and signing each process hash value accumulator not stored on execution memory by applying the signature function. This "signature approach" offers the advantage of improving the security of the integrity method, since validation of signatures may be done in several points of the integrity method, so that any malicious change in some accumulator (either global or process related) may be detected.

In embodiments of the invention according to the "signature approach", the integrity method may further comprise encrypting the global hash value accumulator by applying an encrypting function; and encrypting each process hash value accumulator not stored on execution memory by applying the encrypting function. This "encryption and signature approach" is especially advantageous in combination with the "keyed hash and non collision resistant aggregation approach", as argued in the next paragraph.

With the application of a non collision resistant aggregation it is possible (difficult but possible) that an attacker obtains some "malicious" data that inputted to the non collision resistant aggregation function produces the same result that the application of the non collision resistant aggregation function to some protected data, so that said protected data could be substituted by said "malicious" data with no possibilities of detection by the integrity method. Encryption of related accumulators (either global or process related) implies that the attacker cannot know the content of said related accumulators, so that obtaining the mentioned "malicious" data is not possible because the target result, that is to say, the content of the related accumulators, cannot be known by the attacker.

Alternatively to the "signature approach" and to the "encryption and signature approach", the integrity method may further comprise storing the global hash value accumulator into a Hardware Security Module; and storing each process hash value accumulator not stored on execution memory into the Hardware Security Module. This "Hardware Security Module approach" also is a good option to improve the security of the integrity method, specially against replay attacks based on substitution of the protected data and integrity data by a complete previous version, as for example a backup.

A digital signature is a mathematical scheme that allows to check the authenticity of particular data, said signature (or digital signature) being generated through the application of a signature function to said particular data. There are two types of signature functions: symmetric and asymmetric. Symmetric signature functions generate signatures the validation of which requires applying the secret used for generating said symmetric signatures, whereas asymmetric signature functions generate signatures the validation of which requires applying a public key mathematically related to the secret used for generating said asymmetric signatures.

In the embodiments of the integrity method comprising application of a signature function, said signature function may be symmetric (for example: DES-MAC, SHA-MAC, etc.) or asymmetric (for example: RSA, DSA, ECDSA, etc.), in both cases improving the security of the integrity method and in the case of asymmetric signatures making possible the verification of the integrity by external personnel (for example, an auditor) knowing the public key necessary for validation of the asymmetric signatures.

In cryptography, encryption is the process of transforming input data using an algorithm (encrypting function) to make it unreadable to anyone except those possessing special knowledge, usually referred to as a key. Examples of applicable encrypting functions are: AES (Advanced Encryption Standard), Blowfish, DES (Data Encryption Standard), etc.

A Hardware Security Module (often abbreviated to HSM) is a type of secure crypto processor targeted at managing digital keys that permits, among other functionalities, secure storage of data in a way that said stored data is not accessible to not allowed personnel or processes. Then, accumulators may be stored on said HSM instead of stored on "normal" disk memory, so that accumulators are protected against replay attacks.

Either the "signature approach", the "encryption and signature approach" and the "Hardware Security Module approach" highly increases the security of the integrity method, as argued in preceding descriptions, but with a higher cost in terms of computing resources, since some extra calculations are necessary, but said extra calculations may be assumed if very high security is a crucial requirement.

In the embodiments according to the "signature approach" or to the "encryption and signature approach", the signature function may comprise a related validation function that permits validate the authenticity of the global hash value accumulator and the authenticity of any of the process hash value accumulators. Moreover, also in preferred embodiments of the "encryption and signature approach", the encrypting function may also comprise a decrypting function that permits to decrypt the global hash value accumulator and any of the process hash value accumulators in order to operate (e.g. aggregate) them.

The following descriptions comprise a particular narrative structure with the following pattern:
after/before <action 1>:
   <action 2>;
which has to be understood as the <action 2> is executed after/before the execution of <action 1>. That is to say, "after <action 1>: <action 2>" means that execution of <action 2> is later than the execution of <action 1>, whereas "before <action 1>: <action 2>" means that execution of <action 2> is previous to the execution of <action 1>.

Depending on implementation requirements or decisions, the structure "after <action 1>: <action 2>" may be understood as "just after <action 1>: <action 2>", which means that <action 2> is executed immediately after the execution of <action 1>, and the structure "before <action 1>: <action 2>" may be understood as "just before <action 1>: <action 2>", which means that <action 2> is executed immediately before the execution of <action 1>.

In some embodiments according to the "signature approach", the integrity method may comprise:
after initializing the global hash value accumulator with a random value:
   signing the global hash value accumulator by applying a signature function, so that a signature of the global hash value accumulator is generated;
after defining a process hash value accumulator related to the created process:
   in case of the process hash value accumulator not stored on execution memory, signing the process hash value accumulator by applying the signature function, so that a signature of the process hash value accumulator is generated;
before aggregating 304 the operation hash value to the global hash value accumulator:
   validating the signature of the global hash value accumulator by applying a validation function related to the signature function;
after aggregating 304 the operation hash value to the global hash value accumulator:
   signing the global hash value accumulator by applying the signature function, so that the signature of the global hash value accumulator is regenerated;
before aggregating 305 the operation hash value to the process hash value accumulator related to the process executing the updating operation:
   in case of the process hash value accumulator not stored on execution memory, validating the signature of the process hash value accumulator by applying the validation function;
after aggregating 305 the operation hash value to the process hash value accumulator related to the process executing the updating operation:
   in case of the process hash value accumulator not stored on execution memory, signing the process hash value accumulator by applying the signature function, so that the signature of the process hash value accumulator is regenerated;
before aggregating 301 the global hash value accumulator and the process hash value accumulators by applying the aggregation function:
   for each process hash value accumulator not stored on execution memory: validating the signature of the process hash value accumulator by applying the validation function;
   validating the signature of the global hash value accumulator by applying the validation function.

In some embodiments according to the "signature approach", the integrity method may comprise:
before aggregating 404 the inverse value of the initialized process hash value accumulator to the global hash value accumulator:
   validating the signature of the global hash value accumulator by applying the validation function;
after aggregating 404 the inverse value of the initialized process hash value accumulator to the global hash value accumulator:
   signing the global hash value accumulator by applying the signature function, so that the signature of the global hash value accumulator is regenerated.

In some embodiments according to the "signature approach", the integrity method may comprise:
when final consolidation of at least one process hash value accumulator is requested according to predetermined consolidation rules:
   before aggregating the process hash value accumulator to the global hash value accumulator:
      in case of the process hash value accumulator not stored on execution memory, validating the signature of the process hash value accumulator by applying the validation function;
      validating the signature of the global hash value accumulator by applying the validation function;
   after aggregating the process hash value accumulator to the global hash value accumulator:
      signing the global hash value accumulator by applying the signature function, so that the signature of the global hash value accumulator is regenerated.

In some embodiments according to the "signature approach", the integrity method may comprise:
when halfway consolidation of at least one process hash value accumulator is requested according to predetermined consolidation rules:
   after initializing the process hash value accumulator with a random value:
      in case of the process hash value accumulator not stored on execution memory, signing the process hash value accumulator by applying the signature function, so that the signature of the process hash value accumulator is regenerated;
   before aggregating the process hash value accumulator before initialization and the inverse value of the process hash value accumulator after initialization to the global hash value accumulator:
      validating the signature of the global hash value accumulator by applying the validation function;
   after aggregating the process hash value accumulator before initialization and the inverse value of the process hash value accumulator after initialization to the global hash value accumulator:
      signing the global hash value accumulator by applying the signature function, so that the signature of the global hash value accumulator is regenerated.

In some embodiments according to the "encryption and signature approach", the integrity method may comprise:
after initializing the global hash value accumulator with a random value:
   encrypting the global hash value accumulator by applying an encrypting function;
after defining a process hash value accumulator related to the created process:
   in case of the process hash value accumulator not stored on execution memory: encrypting the global hash value accumulator by applying the encrypting function;
before aggregating 304 the operation hash value to the global hash value accumulator:
   decrypting the global hash value accumulator by applying a decrypting function related to the encrypting function;
after aggregating 304 the operation hash value to the global hash value accumulator:
   encrypting the global hash value accumulator by applying the encrypting function;
before aggregating 305 the operation hash value to the process hash value accumulator related to the process executing the updating operation:
   in case of the process hash value accumulator not stored on execution memory: decrypting the process hash value accumulator by applying the decrypting function;
after aggregating 305 the operation hash value to the process hash value accumulator related to the process executing the updating operation:
   in case of the process hash value accumulator not stored on execution memory: encrypting the process hash value accumulator by applying the encrypting function;
before aggregating 301 the global hash value accumulator and the process hash value accumulators by applying the aggregation function:
   for each process hash value accumulator not stored on execution memory: decrypting the process hash value accumulator by applying the decrypting function;
   decrypting the global hash value accumulator by applying the decrypting function;
after aggregating 301 the global hash value accumulator and the process hash value accumulators by applying the aggregation function:
   for each process hash value accumulator not stored on execution memory: encrypting the process hash value accumulator by applying the encrypting function;
   encrypting the global hash value accumulator by applying the encrypting function.

In some embodiments according to the "encryption and signature approach", the integrity method may comprise:
before aggregating 404 the inverse value of the initialized process hash value accumulator to the global hash value accumulator:
   decrypting the global hash value accumulator by applying the decrypting function;
after aggregating 404 the inverse value of the initialized process hash value accumulator to the global hash value accumulator:
   encrypting the global hash value accumulator by applying the encrypting function.

In some embodiments according to the "encryption and signature approach", the integrity method may comprise:
when final consolidation of at least one process hash value accumulator is requested according to predetermined consolidation rules:
   before aggregating the process hash value accumulator to the global hash value accumulator:
      in case of the process hash value accumulator not stored on execution memory: decrypting the process hash value accumulator by applying the decrypting function;
      decrypting the global hash value accumulator by applying the decrypting function;
   after aggregating the process hash value accumulator to the global hash value accumulator:
      in case of the process hash value accumulator not stored on execution memory: encrypting the process hash value accumulator by applying the encrypting function;
      encrypting the global hash value accumulator by applying the encrypting function.

In some embodiments according to the "encryption and signature approach", the integrity method may comprise:
when halfway consolidation of at least one process hash value accumulator is requested according to predetermined consolidation rules:
   after initializing the process hash value accumulator with a random value:
      in case of the process hash value accumulator not stored on execution memory: encrypting the process hash value accumulator by applying the encrypting function;
   before aggregating the process hash value accumulator before initialization and the inverse value of the process hash value accumulator after initialization to the global hash value accumulator:
      decrypting the global hash value accumulator by applying the decrypting function;
   after aggregating the process hash value accumulator before initialization and the inverse value of the process hash value accumulator after initialization to the global hash value accumulator:
      encrypting the global hash value accumulator by applying the encrypting function.

In some embodiments according to the "Hardware Security Module approach", the integrity method may comprise:
after initializing the global hash value accumulator with a random value:
   storing the global hash value accumulator into a Hardware Security Module;
after defining a process hash value accumulator related to the created process:
   in case of the process hash value accumulator not stored on execution memory: storing the global hash value accumulator into the Hardware Security Module;
before aggregating 304 the operation hash value to the global hash value accumulator:
   retrieving the global hash value accumulator from the Hardware Security Module;
after aggregating 304 the operation hash value to the global hash value accumulator:
   storing the global hash value accumulator into the Hardware Security Module;
before aggregating 305 the operation hash value to the process hash value accumulator related to the process executing the updating operation:
   in case of the process hash value accumulator not stored on execution memory: retrieving the process hash value accumulator from the Hardware Security Module;
after aggregating 305 the operation hash value to the process hash value accumulator related to the process executing the updating operation:
   in case of the process hash value accumulator not stored on execution memory: storing the process hash value accumulator into the Hardware Security Module;
before aggregating 301 the global hash value accumulator and the process hash value accumulators by applying the aggregation function:
   for each process hash value accumulator: retrieving the process hash value accumulator from the Hardware Security Module;
   retrieving the global hash value accumulator from the Hardware Security Module;
after aggregating 301 the global hash value accumulator and the process hash value accumulators by applying the aggregation function:
   for each process hash value accumulator: storing the process hash value accumulator into the Hardware Security Module;
   storing the global hash value accumulator into the Hardware Security Module.

In some embodiments according to the "Hardware Security Module approach", the integrity method may comprise:
before aggregating 404 the inverse value of the initialized process hash value accumulator to the global hash value accumulator:
   retrieving the global hash value accumulator from the Hardware Security Module;
after aggregating 404 the inverse value of the initialized process hash value accumulator to the global hash value accumulator:
   storing the global hash value accumulator into the Hardware Security Module.

In some embodiments according to the "Hardware Security Module approach", the integrity method may comprise:
when final consolidation of at least one process hash value accumulator is requested according to predetermined consolidation rules:
   before aggregating the process hash value accumulator to the global hash value accumulator:
      in case of the process hash value accumulator not stored on execution memory: retrieving the process hash value accumulator from the Hardware Security Module;
      retrieving the global hash value accumulator from the Hardware Security Module;
   after aggregating the process hash value accumulator to the global hash value accumulator:
      in case of the process hash value accumulator not stored on execution memory: storing the process hash value accumulator into the Hardware Security Module;
      storing the global hash value accumulator into the Hardware Security Module.

In some embodiments according to the "Hardware Security Module approach", the integrity method may comprise:
when halfway consolidation of at least one process hash value accumulator is requested according to predetermined consolidation rules:
   after initializing the process hash value accumulator with a random value:
      in case of the process hash value accumulator not stored on execution memory: storing the process hash value accumulator into the Hardware Security Module;
   before aggregating the process hash value accumulator before initialization and the inverse value of the process hash value accumulator after initialization to the global hash value accumulator:
      retrieving the global hash value accumulator from the Hardware Security Module;
   after aggregating the process hash value accumulator before initialization and the inverse value of the process hash value accumulator after initialization to the global hash value accumulator:
      storing the global hash value accumulator into the Hardware Security Module.

## Claims

1. A method for verifying the integrity of a set of data in a system creating at least one process executing at least one updating operation on the set of data, **characterized in that** the method comprises:
for (101) each updating operation executed by a process created in the system:
calculating (102) an operation hash value representing the updating operation by applying a hash function to the updating operation;
aggregating (103) the operation hash value to a global hash value accumulator by applying an aggregation function;
when (104, 105) a condition for verifying the integrity of the set of data is satisfied:
calculating (106) an element hash value for each element of the set of data by applying the hash function to each element of the set of data;
calculating (107) an aggregated element hash value by aggregating the calculated element hash values by applying the aggregation function;
verifying (108) the integrity of the set of data by comparing the aggregated element hash value and the global hash value accumulator.

2. A method according to claim 1, wherein applying a hash function to the updating operation comprises:
if the updating operation is insertion (212) of an element:
applying (202) the hash function to the inserted element;
if the updating operation is deletion (213) of an element:
applying (204) the hash function to the deleted element;
calculating (205) the inverse value of the result of applying the hash function to the deleted element;
if the updating operation is modification (214) of an element:
applying (207) the hash function to the element before modification;
calculating (208) the inverse value of the result of applying the hash function to the element before modification;
applying (209) the hash function to the element after modification;
aggregating (210) the result of applying the hash function to the element after modification and the inverse value of the result of applying the hash function to the element before modification, by applying the aggregation function.

3. A method according to any of claims 1 or 2, wherein the method further comprises:
for each creation of a process in the system:
defining a process hash value accumulator related to the created process;
wherein aggregating (103) the operation hash value to the global hash value accumulator comprises:
verifying (303) if the global hash value accumulator must be used for aggregation according to predetermined dispersion rules;
in case of positive result:
aggregating (304) the operation hash value to the global hash value accumulator by applying the aggregation function;
in case of negative result:
aggregating (305) the operation hash value to the process hash value accumulator related to the process executing the updating operation, by
applying the aggregation function;
and wherein comparing the aggregated element hash value and the global hash value accumulator comprises:
aggregating (301) the global hash value accumulator and the process hash value accumulators by applying the aggregation function;
comparing (302) the aggregated element hash value and the result of aggregating the global hash value accumulator and the process hash value accumulators.

4. A method according to claim 3, wherein defining a process hash value accumulator related to the created process comprises:
creating (401) the process hash value accumulator;
initializing (402) the created process hash value accumulator with a random value;
calculating (403) the inverse value of the initialized process hash value accumulator;
aggregating (404) the inverse value of the initialized process hash value accumulator to the global hash value accumulator by applying the aggregation function.

5. A method according to any of claims 3 or 4, further comprising:
when final consolidation of at least one process hash value accumulator is requested according to predetermined consolidation rules:
aggregating the process hash value accumulator to the global hash value accumulator;
eliminating the process hash value accumulator.

6. A method according to any of claims 3 to 5, further comprising:
when halfway consolidation of at least one process hash value accumulator is requested according to predetermined consolidation rules:
initializing the process hash value accumulator with a random value;
calculating the inverse value of the process hash value accumulator after initialization;
aggregating the process hash value accumulator before initialization and the inverse value of the process hash value accumulator after initialization to the global hash value accumulator, by applying the aggregation function.

7. A method according to any of claims 3 to 6, wherein the hash function is a non keyed hash function and the aggregation function is a collision resistant aggregation function.

8. A method according to any of claims 3 to 6, wherein the hash function is a keyed hash function and the aggregation function is a non collision resistant aggregation function.

9. A method according to any of claims 3 to 8, further comprising:
signing the global hash value accumulator by applying a signature function; and
signing each process hash value accumulator not stored on execution memory by applying the signature function.

10. A method according to claim 9, further comprising:
encrypting the global hash value accumulator by applying an encrypting function;
encrypting each process hash value accumulator not stored on execution memory by applying the encrypting function.

11. A method according to any of claims 3 to 8, further comprising:
storing the global hash value accumulator into a Hardware Security Module; and
storing each process hash value accumulator not stored on execution memory into the Hardware Security Module.

12. A computer program product comprising program instructions for causing a computer to perform a method for verifying the integrity of a set of data in a system creating at least one process executing at least one updating operation on the set of data, according to any of claims 1 to 11.

13. A computer program product according to claim 12, embodied on a storage medium.

14. A computer program product according to claim 12, carried on a carrier signal.

15. A system for verifying the integrity of a set of data in a system creating at least one process executing at least one updating operation on the set of data, comprising:
computer means for calculating (102) an operation hash value representing the updating operation by applying a hash function to the updating operation;
computer means for aggregating (103) the operation hash value to a global hash value accumulator by applying an aggregation function;
computer means for detecting (104, 105) a condition for verifying the integrity of the set of data is satisfied;
computer means for calculating (106) an element hash value for each element of the set of data by applying the hash function to each element of the set of data;
computer means for calculating (107) an aggregated element hash value by aggregating the calculated element hash values by applying the aggregation function;
computer means for verifying (108) the integrity of the set of data by comparing the aggregated element hash value and the global hash value accumulator.
